# EUROPÄISCHE PATENTANMELDUNG

(11) **EP 2 679 949 A1**
(43) Veröffentlichungstag der Anmeldung: **01.01.2014**
(21) Anmeldenummer: 13173541.7
(22) Anmeldetag: 25.06.2013
(51) Int. Cl.: G01B 5/00, G01B 5/30

(54) **Verfahren zur Messung von Dehnungen**

(30) Priorität: 28.06.2012 DE 102012012861
(71) Anmelder: Bilfinger Piping Technologies GmbH, 45329 Essen (DE)
(72) Erfinder: Gräb, Thomas, 46535 Dinslaken (DE)
(74) Vertreter: Cohausz & Florack

(57) **Zusammenfassung**

Dargestellt und beschrieben sind ein Verfahren zur Messung von Dehnungen, insbesondere von plastischen Dehnungen von Rohrleitungen (1), umfassend die folgenden Schritte:
- Aufbringen von wenigstens zwei Messkörpern (2) auf eine Messoberfläche (3),
- Durchführen einer Nullmessung,
- Durchführen wenigstens einer Wiederholungsmessung, und
- Vergleichen der Messwerte zur Bestimmung eines Dehnungswertes
sowie ein Messkörper zur Verwendung in einem solchen Verfahren. Damit eine kostengünstige und präzise Messung von plastischen Dehnungen an Hochtemperaturbauteilen ermöglicht wird, ist vorgesehen, dass die Nullmessung und die Wiederholungsmessungen mit einem berührenden Messverfahren erfolgen. Dazu weist jeder Messkörper (2) eine Zentrierbohrung (5), insbesondere eine kegelförmige Zentrierbohrung, auf.

## Beschreibung

Die Erfindung betrifft ein Verfahren zur Messung von Dehnungen, insbesondere von plastischen Dehnungen von Rohrleitungen, umfassend die folgenden Schritte: Aufbringen von wenigstens zwei Messkörpern auf eine Messoberfläche, Durchführen einer Nullmessung, Durchführen wenigstens einer Wiederholungsmessung, und Vergleichen der Messwerte zur Bestimmung eines Dehnungswertes. Die Erfindung betrifft ferner einen Messkörper zur Verwendung in dem beschriebenen Verfahren.

Aus der Praxis sind zahlreiche Verfahren zur Messung von Dehnungen bekannt. Besondere Anforderungen an das eingesetzte Messverfahren werden etwa dann gestellt, wenn die Dehnung eines Körpers gemessen werden soll, der sehr hohen Temperaturen und Drücken ausgesetzt ist. Dies ist beispielsweise bei Rohrleitungen im Kraftwerksbau der Fall. In Kraftwerken sind insbesondere die Rohrleitungen aus dem Frischdampfbereich sowie aus dem Bereich der Zwischenüberhitzung besonders hohen Temperaturen und Innendrücken ausgesetzt. Die Kombination aus einer hohen thermischen Belastung und einer hohen mechanischen Belastung dieser Rohrleitungen kann eine plastische Verformung der Rohre zur Folge haben, die auch als "Kriechen" bezeichnet wird.

Bei Raumtemperatur führt eine statische Last unterhalb der Streckgrenze regelmäßig ausschließlich zu elastischen Verformungen. Eine derartige Belastung kann von einem Bauteil praktisch unendlich lange ertragen werden, was auch als Dauerfestigkeit bezeichnet wird. Daher werden die meisten Bauteile so ausgelegt, dass die auftretenden Belastungen den Bereich der elastischen Dehnungen nicht überschreiten.

Im Gegensatz dazu führt das durch eine Beanspruchung bei hohen Temperaturen verursachte Kriechen neben einer elastischen Dehnung zusätzlich zu einer zeitlich fortschreitenden, plastischen Dehnung (Kriechdehnung). Eine Kriechdehnung ist stets mit einer Werkstoffschädigung verbunden und begrenzt die Bauteillebensdauer. Das Kriechen kann zu Bauteilversagen führen und stellt daher eine erhebliche Herausforderung dar. Die Kenntnis des Kriechverhaltens eines Werkstoffs unter Beanspruchung ist daher unumgänglich für die Auslegung von Hochtemperaturbauteilen.

Neben einer fachgerechten Auslegung sollte bei Hochtemperaturbauteilen auch eine Überwachung oder Überprüfung der beanspruchten Bauteile bei laufendem Betrieb erfolgen.

Eine Möglichkeit der Überprüfung von Hochtemperaturbauteilen stellt die so genannte ambulante Bauteilmetallographie dar. Bei dieser Methode wird entweder eine metallographische Untersuchung, etwa mit einem aufgesetzten Mikroskop, vor Ort am präparierten Bauteil durchgeführt oder es wird ein Abdruck des Bauteilgefüges gemacht, in ein Labor gebracht und dort untersucht ("Replika-Technik"). Die ambulante Bauteilmetallographie ist jedoch sehr zeit- und kostenaufwändig und eignet sich daher vor allem für die Überprüfung einer geringen Anzahl von gezielt durch Berechnung bzw. durch Praxiserfahrung ausgewählten Bereichen kritischer Komponenten. Eine Aussage der wiederkehrenden Bauteilprüfung auf Basis einer höheren Anzahl von Replikaprüfungen ist zeitlich und wirtschaftlich häufig nicht umsetzbar.

Eine Überwachung von Hochtemperaturbauteilen kann auch durch eine kontinuierliche Messung der Dehnungen dieser Bauteile erfolgen. Viele Messverfahren sind jedoch ungeeignet zur Messung von Kriechdehnungen an Hochtemperaturbauteilen.

Zur Messung von Dehnungen haben sich ferner Dehnungsmesstreifen, kurz DMS, bewährt. Dehnungsmesstreifen bestehen aus einer Trägerfolie und einem von der Trägerfolie umschlossenen Widerstandsdraht. Sie ändern bereits bei geringen Verformungen ihren elektrischen Widerstand und können daher als Dehnungssensoren eingesetzt werden. Dehnungsmessstreifen werden üblicherweise mittels Spezialklebstoffen auf die zu messenden Bauteile aufgeklebt, um die Verformung der Bauteiloberfläche optimal aufnehmen zu können. Gerade bei Hochtemperaturbauteilen gestaltet sich die Applikation der Dehnungsmesstreifen jedoch sehr aufwändig, da nur wenige Klebstoffe für den Einsatz bei hohen Temperaturen geeignet sind. Weitere Probleme entstehen im Hochtemperaturbereich dadurch, dass der elektrische Widerstand temperaturabhängig ist und dass der Dehnungsmessstreifen bei hohen Temperaturen selbst Kriecherscheinungen unterworfen ist.

Auch berührungslose Messverfahren, insbesondere optische Messverfahren werden zur Messung von Dehnungen eingesetzt.

Aus der Patentschrift DE 101 13 216 B4 ist ein Verfahren zur berührungslosen, optischen Messung des Kriechens eines hohlzylindrischen Bauteils bei hoher Temperatur und hohem Innendruck bekannt. Optische Verfahren zur Messung von Dehnungen sind zudem aus der DE 42 00 173 A1, der DE 33 09 951 A1, der DE 25 26 753 A1, der DE 197 07 968 C2, der EP 0 646 770 B1 und der US 4,591,996 bekannt.

Die genannten optischen Messverfahren sind zur Messung von sich schnell ändernden, dynamischen Belastungen besonders geeignet, da optische Messverfahren ohne die Störfaktoren Reibung und Massenträgheit erfolgen. Nachteilig an optischen Messverfahren ist jedoch der hohe Aufwand. Zunächst müssen kontrastreiche Markierungen auf die Bauteiloberfläche aufgebracht werden. Zudem sind eine Kamera, eine Bildverarbeitungseinheit sowie eine Bildauswertungseinheit erforderlich. Insbesondere bei mehreren gleichzeitig zu überwachenden Bauteilen haben optische Messverfahren daher hohe Kosten zur Folge.

Der Erfindung liegt daher die Aufgabe zugrunde, das eingangs beschriebene und zuvor näher dargestellte Verfahren sowie einen Messkörper zur Verwendung in diesem Verfahren derart auszugestalten und weiterzubilden, dass die aus dem Stand der Technik bekannten Nachteile vermieden werden und dass eine kostengünstige und präzise Messung von plastischen Dehnungen an Hochtemperaturbauteilen ermöglicht wird.

Gelöst wird diese Aufgabe bei einem Verfahren nach dem Oberbegriff von Patentanspruch 1 dadurch, dass die Nullmessung und die Wiederholungsmessungen mit einem berührenden Messverfahren erfolgen. Berührende Messverfahren, die auch als taktile Messverfahren bezeichnet werden, zeichnen sich durch eine hohe Genauigkeit und durch eine große Robustheit aus. Zudem sind die Kosten aufgrund des geringeren apparativen Aufwands regelmäßig geringer als bei optischen Messverfahren. Eine taktile Messung kann insbesondere durch einen mechanischen Messtaster erfolgen, der beispielsweise den Abstand zwischen zwei Messpunkten erfasst, indem er beide Messpunkte fortlaufend berührt.

Die messtechnische Erfassung der Kriechdehnungen kann eingesetzt werden, um die Ermittlung der Zeitstandschädigung zu vereinfachen und auszuweiten. Somit wird es möglich, eine Kriechdehnungskurve für den jeweiligen Prüfort zu erstellen. Mit Hilfe der Kriechdehnungsinformationen kann die Beurteilung der Zeitstandschädigung bis zu einem kritischen Zeitpunkt ohne die Entnahme von Replika erfolgen. Die Entnahme von Gefügeabdrücken ist dann erst nach Erreichen einer kritischen Marke notwendig, wie beispielsweise der Grenze zum tertiären Kriechbereich. Erfindungsgemäß lässt sich dazu über Langzeituntersuchungen an thermisch und spannungsseitig beanspruchten Bauteilen ein lokal hochauflösendes und kostengünstiges Messsystem zur Anlagenüberwachung schaffen. Angestrebt wird eine Korrelation mit den Schädigungsklassen nach VGB TW 507.

Nach einer weiteren Ausgestaltung der Erfindung wird vorgeschlagen, dass die Nullmessung bei Raumtemperatur erfolgt. Eine Messung bei Raumtemperatur kann einfach durchgeführt werden und liefert gut vergleichbare Werte zwischen den Einzelmessungen. Bevorzugt erfolgt die Nullmessung nach Abbau der applikationsimmanenten Spannungen durch plastische Dehnung nach thermischer Auslagerung (auch durch Betriebstemperatur).

Zwischen den Messungen können die zu untersuchenden Bauteile Temperaturen von über 700°C ausgesetzt sein. Bei Temperaturen von über 500°C ist die Gefahr von Kriechdehnungen besonders hoch, so dass bei Belastungen in diesem Temperaturbereich eine Überwachung der Bauteildehnungen besonders wichtig ist. Die taktile Dehnungsmessung wird jedoch wiederum bei Raumtemperatur durchgeführt. Erfindungsgemäß erfolgt eine kostengünstigere Umsetzung der Messung, da auf Dehnungsmessstreifen vollständig verzichtet werden kann.

Durch die Verbindung von Messkörper und Messoberfläche, insbesondere wenn beide Teile miteinander verschweißt werden, können Spannungen und Gefügeveränderungen entstehen. Diese Spannungen und Gefügeveränderungen können durch die Einwirkung hoher Temperaturen über einen längeren Zeitraum abgebaut bzw. verringert werden. Dieser Effekt wird beispielsweise beim Spannungsarmglühen ausgenutzt. Indem die erste Wiederholungsmessung erst erfolgt, nachdem das Bauteil über einen längeren Zeitraum einer hohen Temperatur ausgesetzt war, wird verhindert, dass fertigungsbedingte Spannungen und die daraus resultierenden Dehnungen die Messergebnisse verfälschen.

Eine weitere Ausgestaltung der Erfindung sieht vor, dass die Nullmessung und/oder die Wiederholungsmessungen mit einem mechanischen Messtaster mit einer Messgenauigkeit ("Auflösung") von ca. 1 µm erfolgt. Mechanische Messtaster zeichnen sich durch große Robustheit und geringe Kosten aus. Eine Bewertung der Kriechdehnungswerte zeigt, dass Messgenauigkeiten besser als 10 µm erforderlich sind, um eine ausreichende Bewertung von Kriechdehnungen vornehmen zu können. Elektronische Messtaster werden auch als digitale Messtaster bezeichnet und zeichnen sind durch eine hohe Genauigkeit aus. Zudem können elektronische Messtaster aufgrund der digitalen Ausgangssignale unmittelbar an andere digital arbeitende Geräte angeschlossen werden.

In weiterer Ausbildung der Erfindung ist vorgesehen, dass drei Messkörper in Form eines Dreiecks auf die Messoberfläche aufgebracht werden. Die Verwendung von drei Messkörpern hat gegenüber einer Anordnung aus lediglich zwei Messkörpern den Vorteil, dass Dehnungen in mehrere Richtungen gemessen werden können und somit komplexe Dehnungsvorgänge erfasst werden können. Zudem ist durch die Anordnung in Form eine Dreiecks eine erhöhte Messwertgenerierung erzielbar, da nicht nur der Abstand zwischen zwei Messpunkten, sondern auch die Winkel zwischen den Verbindungslininen mehrerer Messpunkte gemessen und bei der Auswertung berücksichtigt werden können. Der Abstand zwischen den Messkörpern kann beispielsweise 10 mm bis 35 mm betragen.

Eine besonders stabile und dauerhafte Verbindung zwischen Messkörpern und Messoberfläche kann nach einer weiteren Ausgestaltung der Erfindung erreicht werden, indem die Messkörper stoffschlüssig mit der Messoberfläche verbunden werden. Stoffschlüssige, etwa durch Schweißen erzeugte Verbindungen sind besonders robust und gewährleisten eine unlösbare, zuverlässige Verbindung zwischen Messkörpern und Messoberfläche. Ein Verrutschen oder Ablösen der Messkörper wird also auch bei hoher Belastung sicher verhindert. Zudem existieren für eine Vielzahl von Materialpaarungen geeignete Schweißverfahren.

Eine weitere Ausgestaltung der Erfindung sieht vor, dass die Messkörper durch Bolzenschweißen, insbesondere durch Kondensator-Entladungsschweißen, mit der Messoberfläche verbunden werden. Insbesondere bei zylindrischen, bolzenförmigen Messkörpern bietet sich das Lichtbogenbolzenschweißen, kurz Bolzenschweißen, als Fügeverfahren an. Beim Bolzenschweißen wird zwischen einer Stirnfläche des bolzenförmigen Messkörpers und der Messoberfläche ein Lichtbogen gezündet. Der Lichtbogen schmilzt die Oberflächen beider Teile lokal an, so dass sie unter geringem Anpressdruck zusammengefügt werden können. Bolzenschweißverfahren können unter anderem nach der Art der Energiequelle unterschieden werden. Als besonders geeignet für das Verbinden von Messkörpern und Messoberfläche hat sich das Kondensator-Entladungsschweißen herausgestellt, da es eine hohe Reproduzierbarkeit und eine einfache Handhabung bietet. Mit einem Schweißstrom von 700 A bis 800 A und einer Schweißzeit von 30 ms bis 40 ms wurden bei Messkörpern aus Nickelbasiswerkstoffen gute Schweißergebnisse erzielt. Bei Messkörpern aus Edelstahl wurden mit einem Schweißstrom von 800 A bis 900 A und einer Schweißzeit von 50 ms bis 90 ms gute Schweißergebnisse erzielt.

Nach einer weiteren Ausgestaltung der Erfindung wird vorgeschlagen, dass der Messkörper und ein optional vorgesehner Einsatz durch eine Schraubverbindung und/oder einen Hochtemperaturklebstoff miteinander verbunden werden. Eine Schraubverbindung kann besonders einfach und kostengünstig erzeugt werden. Durch einen Hochtemperaturklebstoff, insbesondere einen Zweikomponentenklebstoff, behält die Verbindung auch im ausgehärteten Zustand eine gewisse Elastizität, wodurch hohe Spannungen zwischen Messkörper und Keramikeinsatz ausgeglichen werden können.

Die der Erfindung zugrunde liegende Aufgabe wird bei einem Messkörper nach Patentanspruch 11 dadurch gelöst, dass der Messkörper eine Zentrierbohrung, insbesondere eine kegelförmige Zentrierbohrung aufweist. Eine Zentrierbohrung, insbesondere eine kegel- oder kegelstumpfförmige Zentrierbohrung stellt sicher, dass die Messspitze des Messtasters stets in der gleichen Position angesetzt werden kann und dort während der Messung verbleibt. Auf diese Weise können Messfehler und Messungenauigkeiten vermieden werden. Zudem kann eine Zentrierbohrung einfacher hergestellt werden als eine durch Fräsen oder Drehen geformte Messspitzenaufnahme.

Aufgrund der vorteilhaften Materialeigenschaften sieht eine weitere Ausgestaltung der Erfindung vor, dass der Messkörper aus einem Nickelbasiswerkstoff hergestellt ist. Nickelbasiswerkstoffe sind Legierungen, deren Hauptbestandteil Nickel ist, bei denen der Anteil von Nickel also höher ist als der Anteil jedes anderen Legierungselements. Nickelbasiswerkstoffe zeichnen sich durch eine hohe Zeitstandfestigkeit und eine gute Korrosionsbeständigkeit aus. Durch den Einsatz von Rohrleitungen aus Nickelbasislegierungen in Kraftwerken kann die maximal zulässige Dampftemperatur gesteigert werden. Da vermehrt Rohrleitungen aus Nickelbasiswerkstoffen eingesetzt werden, bietet sich aufgrund der besseren Verschweißbarkeit identischer Materialien auch der Einsatz von Messkörpern aus Nickelbasiswerkstoffen an. Als geeignet hat sich beispielsweise der Nickelbasiswerkstoff mit der Werkstoffnummer 2.4663 und dem chemischen Kurzzeichen NiCr23Co12Mo erwiesen (Bezeichnungen nach Europäischer Norm). Andere Nickelbasiswerkstoffe, wie beispielsweise auch Kobaltbasiswerkstoffe sind bei guter schweißtechnischer Verarbeitung und nachgewiesener Beständigkeit gegen Hochtemperaturoxidation ebenfalls gut geeignet.

Alternativ sieht eine andere Ausgestaltung der Erfindung vor, dass der Messkörper aus austenitischem oder martensitischem Edelstahl hergestellt ist. Da diese Werkstoffe häufig für infrage kommende Rohrleitungen eingesetzt werden, bietet sich aufgrund der besseren Verschweißbarkeit gleicher Materialien auch der Einsatz von Messkörpern ähnlicher chemischer Zusammensetzung an. Als geeignet hat sich beispielsweise der Edelstahl mit der Werkstoffnummer 1.4301 und dem chemischen Kurzzeichen XSCrNi18-10, der auch als V2A bekannt ist, erwiesen (Bezeichnungen nach Europäischer Norm). Ebenso geeignet sind beispielsweise der Edelstahl mit der Bezeichnung P92 und dem chemischen Kurzzeichen X10CrWMoVNb9-2 (Bezeichnungen nach Europäischer Norm) sowie vergleichbare Werkstoffe dieser Werkstoffgruppen. Bei Verwendung von Eisenwerkstoffen ist üblicher Weise aufgrund der Betriebstemperaturen eine Oberflächenbeschichtung erforderlich. Diese Beschichtung (PVD oder ähnliche Verfahren) kann mit Chromnitriden (CrN) oder vergleichbaren Keramiken erfolgen.

In weiterer Ausbildung der Erfindung ist vorgesehen, dass der Messkörper einen Einsatz aus Keramik aufweist. Insbesondere können Einsätze aus Hochtemperaturkeramiken wie Aluminiumoxid, Zirkonoxid oder Cordierit verwendet werden. Vorteile von Hochtemperaturkeramiken sind ihre Beständigkeit gegen Korrosion, Verzunderung und Alterung.

Schließlich ist nach einer weiteren Ausbildung der Erfindung vorgesehen, dass die Messkörper eine Höhe von weniger als 10mm aufweisen sollten. Durch eine geringe Höhe der Messkörper verbessert sich die Messgenauigkeit, da Winkeländerungen bei längeren Messstiften zu einer unzulässigen Erhöhung der Messungenauigkeit führen können.

Die Erfindung wird nachfolgend anhand einer lediglich ein bevorzugtes Ausführungsbeispiel darstellenden Zeichnung näher erläutert. In der Zeichnung zeigen:
- Fig. 1A: einen Abschnitt einer Rohrleitung mit drei Messkörpern in perspektivischer Ansicht;
- Fig. 1B: die drei Messkörper aus Fig. 1A in vergrößerter Ansicht;
- Fig. 2: einen Abschnitt einer Rohrleitung mit einem Messkörper im Querschnitt;
- Fig. 3: drei Messkörper in dreieckiger Anordnung; und
- Fig. 4: zwei Messkörper mit einem Messtaster.

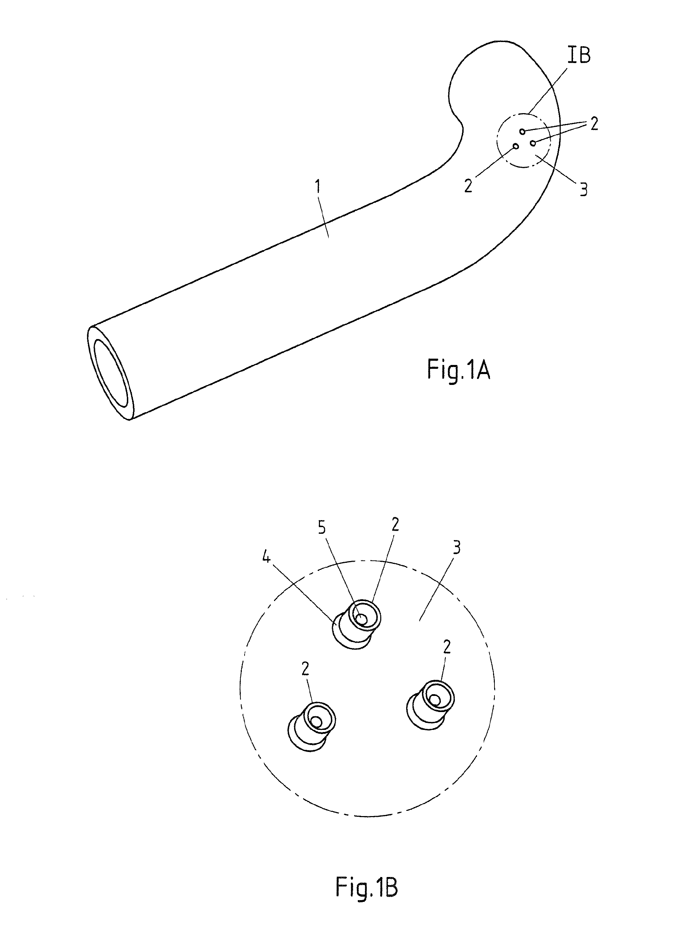

Fig. 1A zeigt einen ersten Abschnitt einer Rohrleitung 1 mit drei auf die Rohrleitung 1 aufgebrachten Messkörpern 2. Bei der Rohrleitung 1 handelt es sich um eine Rohrbiegung, also um ein üblicher weise hoch belastetes Bauteil, welches besonders im Fokus der Lebensdauerüberwachung steht. Bevorzugt werden die Messkörper 2 auf die Rohrleitung 1 geschweißt, so dass eine stoffschlüssige Verbindung entsteht, durch die Bewegungen der Messkörper 2 eindeutig die Dehnung der Messoberfläche 3 wiedergeben. Die Außenfläche der Rohrleitung 1 wird im Bereich der Messkörper 2 als Messoberfläche 3 bezeichnet. Wie in Fig. 1A dargestellt, können die drei Messkörper 2 auf der Messoberfläche 3 in Form eines Dreiecks angeordnet sein. Ebenso sind jedoch auch andere Anordnungen, wie beispielsweise der Aufbau komplexer Messfelder in spannungsseitig interessanten Bereichen von Rohrleitungskomponenten, möglich.

In Fig. 1B werden die drei Messkörper aus Fig. 1A in vergrößerter Ansicht dargestellt. Die Messkörper 2 sind, wie bereits in Fig. 1A erkennbar, in Dreiecksform auf der Messoberfläche 3 angeordnet. Die Verbindung zwischen Messkörpern 2 und Messoberfläche 3 erfolgt bevorzugt durch Schweißverfahren, erkennbar durch einen umlaufenden Schweißwulst 4 am Fußende jedes Messkörpers 2. Die Messkörper 2 weisen zudem an ihrem Kopfende eine zylindrische Zentrierbohrung 5 auf. Die Zentrierbohrungen 5, die auch eine vergleichbare geometrische Ausprägung haben können, stellen einen definierten Eingriffspunkt für einen Messtaster dar und ermöglichen somit eine besonders präzise Messung.

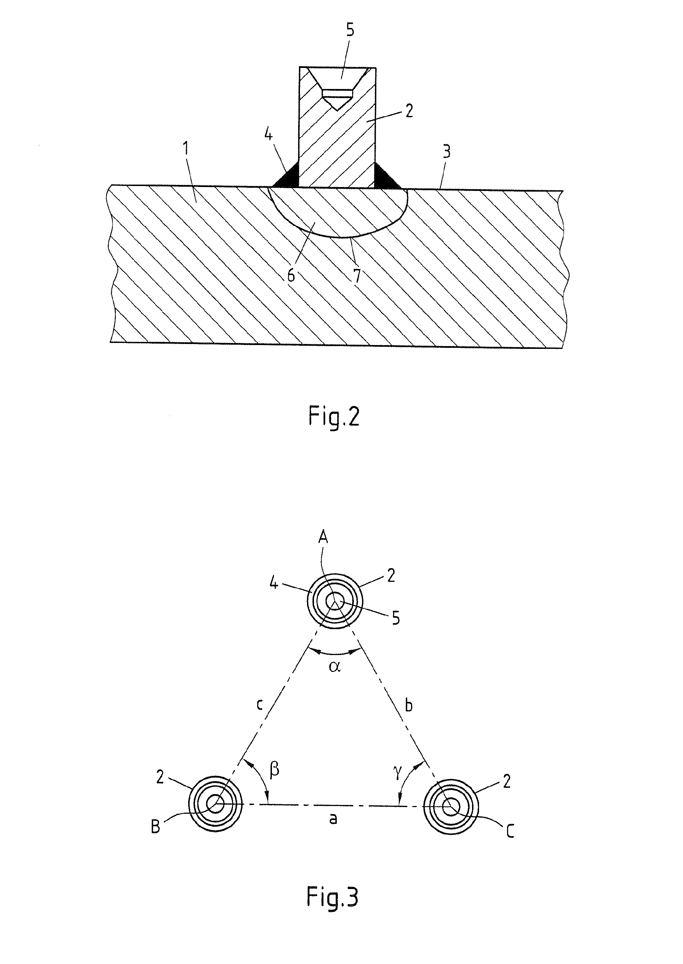

Fig. 2 zeigt einen Abschnitt der Rohrleitung 1 mit dem Messkörper 2 im Querschnitt. Der Messkörper 2 ist mit seinem Fußende mit der Messoberfläche 3 der Rohrleitung 1 verschweißt, wobei sich ein umlaufender Schweißwulst 4 gebildet hat. An seinem Kopfende weist der Messkörper 2 eine Zentrierbohrung 5 auf. Durch die beim Schweißen entstehende Wärme bildet sich im Grundwerkstoff, in Fig. 2 in der Rohrleitung 1, eine Wärmeeinflusszone 6, die von einer Schmelzlinie 7 begrenzt wird.

In Fig. 3 sind im dargestellten Ausführungsbeispiel drei Messkörper 2 in dreieckiger Anordnung dargestellt. Das erfindungsgemäße Messverfahren erlaubt jedoch auch die Option auf ein komplexes Messfeld, aufgebaut nach den jeweiligen geometrischen und spannungstechnischen Erfordernissen der zu untersuchenden Komponenten. jeder Messkörper weist einen umlaufenden Schweißwulst 4 sowie eine Zentrierbohrung 5 auf. Die Ermittlung von Dehnungen kann in den folgenden Schritten erfolgen: Zunächst werden die Koordinaten der Mittelpunkte A, B, C der Zentrierbohrungen 5 ermittelt und aus ihnen die Strecken a, b, c berechnet. Aus diesen Werten werden anschließend die Winkel α, β, y des sich ergebenden Dreiecks errechnet. Aufgrund der dreieckigen Anordnung der Messkörper 2 wird die dargestellte Messmethode auch als "Triangulation" bezeichnet.

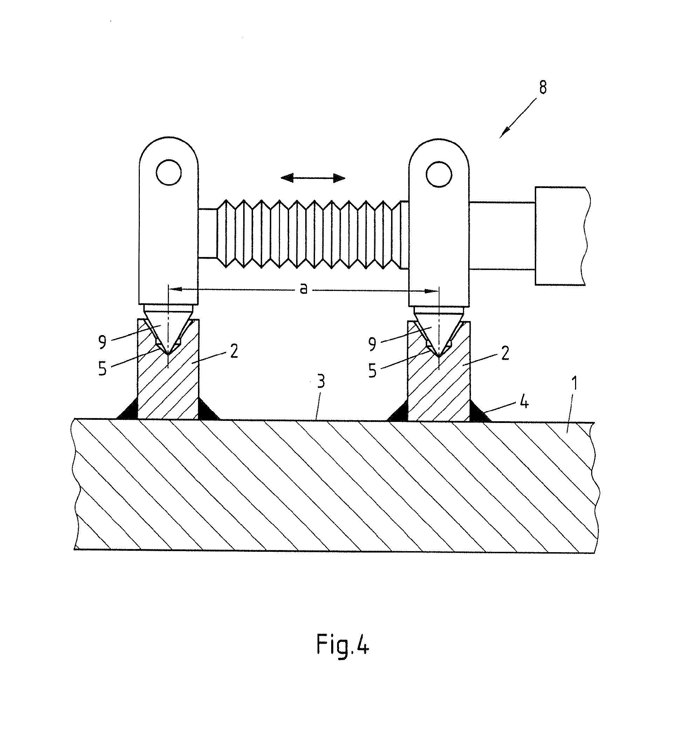

Fig. 4 zeigt zwei Messkörper 2 mit einem Messtaster 8. Der Messtaster 8 weist zwei Messspitzen 9 auf, die in die Zentrierbohrungen 5 der Messkörper 2 eingeführt sind. Auf diese Weise misst der Messtaster 8 den Abstand a zwischen beiden Zentrierbohrungen 5. Alternativ kann der Messtaster 8 auch drei oder mehr Messspitzen 9 aufweisen, um mehrere Abstände gleichzeitig zu messen.

Die Messspitzen 9 sind in der dargestellten und insoweit bevorzugten Ausgestaltung kegelförmig und entsprechen im Wesentlichen der Form der in Fig. 4 ebenfalls kegelförmigen Zentrierbohrungen 5. Es kann vorgesehen sein, dass die Messspitzen 9 eine spitzere Kegelform aufweisen als die Zentrierbohrungen 5. Die Messspitzen 9 können auch eine andere Form aufweisen und beispielsweise kugelförmig ausgebildet sein. Die Form der Zentrierbohrungen 5 und der Messspitzen 9 sollte derart aufeinander abgestimmt sein, dass die Messspitzen 9 sich beim Einführen in die Zentrierbohrungen 5 selbst zentrieren und während der Messung sicher in ihrer Position verbleiben. Wie bereits zuvor beschrieben, sind die Messkörper 2 mit der Messoberfläche 3 verschweißt, wobei sich ein umlaufender Schweißwulst 4 am Fußende der Messkörper 2 bildet. Dieser Schweißwulst 4 lässt sich jedoch bei Bedarf auch beseitigen, beispielsweise durch Schleifen.

## Patentansprüche

1. Verfahren zur Messung von Dehnungen, insbesondere von plastischen Dehnungen von Rohrleitungen (1), umfassend die folgenden Schritte:
- Aufbringen von wenigstens zwei Messkörpern (2) auf eine Messoberfläche (3),
- Durchführen einer Nullmessung,
- Durchführen wenigstens einer Wiederholungsmessung, und
- Vergleichen der Messwerte zur Bestimmung eines Dehnungswertes, **dadurch gekennzeichnet, dass**
die Nullmessung und die Wiederholungsmessungen mit einem berührenden Messverfahren erfolgen.

2. Verfahren nach Anspruch **1,dadurch gekennzeichnet, dass** die Nullmessung bei Raumtemperatur erfolgt.

3. VerfahrennachAnspruch2,**dadurch gekennzeichnet, dass** die Nullmessung nach Abbau der applikationsimmanenten Spannungen durch plastische Dehnung nach thermischer Auslagerung erfolgt.

4. Verfahren nach einem der Ansprüche 1 bis 3,
**dadurch gekennzeichnet, dass**
die Wiederholungsmessungen bei Raumtemperatur erfolgen.

5. Verfahren nach einem der Ansprüche 1 bis 4,
**dadurch gekennzeichnet, dass**
die Nullmessung und/oder die Wiederholungsmessungen mit einem mechanischen Messtaster mit einer Messgenauigkeit besser als 10 µm, Auflösung 1 µm, erfolgt.

6. Verfahren nach einem der Ansprüche 1 bis 4,
**dadurch gekennzeichnet, das s**
die Nullmessung und/oder die Wiederholungsmessungen mit einem elektronischen Messtaster mit einer Messgenauigkeit besser als 10 µm, Auflösung 1 µm, erfolgt.

7. Verfahren nach einem der Ansprüche 1 bis 6,
**dadurch gekennzeichnet, dass**
je nach Komplexität des Messfeldes eine Anzahl von Messkörpern (2) auf die Messoberfläche (3) aufgebracht werden.

8. Verfahren nach einem der Ansprüche 1 bis 7,
**dadurch gekennzeichnet, dass**
die Messkörper (2) stoffschlüssig mit der Messoberfläche (3) verbunden werden.

9. Verfahren nach einem der Ansprüche 1 bis 8,
**dadurch gekennzeichnet, das s**
die Messkörper (2) durch Bolzenschweißen, insbesondere durch Kondensator-Entladungsschweißen, mit der Messoberfläche (3) verbunden werden.

10. Verfahren nach einem der Ansprüche 1 bis 9,
**dadurch gekennzeichnet, dass**
der Messkörper (2) und der Einsatz durch eine Schraubverbindung und/oder einen Hochtemperaturklebstoff miteinander verbunden werden.

11. Messkörper zur Verwendung in einem Verfahren nach einem der Ansprüche 1 bis **10, dadurch gekennzeichnet, das s**
der Messkörper (2) eine Zentrierbohrung (5), insbesondere eine kegelförmige Zentrierbohrung aufweist.

12. MesskörpernachAnspruch 11, **dadurch gekennzeichnet, dass** der Messkörper (2) aus einem Nickelbasiswerkstoff hergestellt ist.

13. MesskörpernachAnspruch 11, **dadurch gekennzeichnet, dass** der Messkörper (2) aus Edelstahl hergestellt ist.

14. Messkörper nach Anspruch 13, **dadurch gekennzeichnet, dass** der Messkörper (2) aus austenitischem oder martensitischem Edelstahl hergestellt ist.

15. Messkörper nach einem der Ansprüche 11 bis 14,
**dadurch gekennzeichnet, dass**
der Messkörper (2) einen Einsatz aus Keramik aufweist.

16. Messkörper nach einem der Ansprüche 1 bis 15,
**dadurch gekennzeichnet, das s**
die Messkörper (2) eine Höhe von weniger als 10 mm aufweisen.
